# EUROPÄISCHE PATENTSCHRIFT

(11) **EP 3 750 746 B1**
(45) Veröffentlichungstag und Bekanntmachung des Hinweises auf die Patenterteilung: **15.12.2021**
(21) Anmeldenummer: 20185695.2
(22) Anmeldetag: 04.01.2019
(51) Int. Cl.: B60N 3/06, B60N 2/28, B60N 2/90, B60N 2/60

(54) **KINDERSITZUNTERLAGE FÜR EIN IN EINEM KRAFTFAHRZEUG ANGEORDNETES KINDERRÜCKHALTESYSTEM**
CHILD SEAT UNDERLAY FOR A CHILD RESTRAINT SYSTEM IN A MOTOR VEHICLE
SUPPORT DE SIÈGE POUR ENFANT POUR UN SYSTÈME DE RETENUE POUR ENFANT DANS UN VÉHICULE AUTOMOBILE

(30) Priorität: 05.01.2018 DE 102018100174; 12.01.2018 DE 102018100662
(43) Veröffentlichungstag der Anmeldung: 16.12.2020
(62) Teilanmeldung aus: 19150282.2
(73) Patentinhaber: Osann GmbH, DE-78244 Gottmadingen (DE)
(72) Erfinder: Osann, Patrick, 78315 Radolfzell (DE); Sklenarz, Johannes, 5505 Mühlbach (AT)
(74) Vertreter: Sperschneider, Alexandra

(56) Entgegenhaltungen:
- WO-A1-2017/078313
- US-A- 5 228 745
- US-A1- 2009 102 257
- US-A1- 2009 224 591
- US-A1- 2016 096 456

## Beschreibung

Die Erfindung betrifft eine Kindersitzunterlage für einen in einem Kraftfahrzeug angeordneten Kindersitz zum Ablegen von Kinderbeinen und/oder zum Abstellen von Kinderfüßen gemäß dem Oberbegriff des Patentanspruchs 1.

Aus dem Stand der Technik ist bekannt, dass Kinderrückhaltesysteme, insbesondere Kindersitze, zu Druckstellen an den Oberschenkeln von Kindern führen können. Dies kommt insbesondere bei längeren Autofahrten vor, wo die Kinder zwar sicherheitstechnisch gut in Kinderrückhaltesystemen platziert werden können. Darüber hinaus ist eine derartige Sitzposition über längere Zeit für die Haltung und die Rückenmuskulatur deutlich nachteilig, da die Füße frei in der Luft hängen.

In diesem Zusammenhang beschreibt die DE 20 103 931 U1 eine Fußabstützung für Kinder auf Autokindersitzen und Stühlen. Hierzu wird eine Sitzauflage offenbart, welche direkt auf der Sitzfläche einer Sitzerhöhung aufgelegt und an dieser lösbar fixiert wird. Ergänzend weist diese Sitzauflage eine eingehängte Fußabstützung auf, welche in aufwendiger Weise durch eine Bänderverstellung an die Beinlänge des Kindes angepasst werden muss. Das in der DE 20 103 931 U1 beschriebene System erweist sich allerdings sicherheitstechnisch als hochgradig nachteilig, da die Sitzauflage direkt auf der Sitzfläche angeordnet wird. Im Falle eines Unfalls, also bei kurzfristig auftretender Impulsbeaufschlagung, besteht die Gefahr, dass das Kind ungewollt auf der zusätzlichen Sitzauflage verrutscht und sich entsprechende Verletzungen zuziehen kann. Darüber hinaus ist zudem die aufwendige Gurtmontage, insbesondere der Fußabstützung zeitaufwendig und ungenau. Durch die beiden einzustellenden Bänder ist für eine physiologisch unbedenkliche Sitzposition stets eine hoch akkurate Justierung notwendig, so dass die an den Bändern angehängte Fußabstützung auch stets horizontal ausgerichtet ist. Werden hingegen die Bänder in ihrer Länge unterschiedlich eingestellt, so ist auch die Fußabstützung selbst in einer schrägen Position, was zu zusätzlichen Haltungsschäden oder Verspannungen während längerer Fahrten führt.

Weiterhin offenbart US 2009 / 102 257 A1 einen Träger für einen Kindersicherheitssitz, welcher der Sitzform eines Kraftfahrzeugsitzes nachempfunden ist. Der Träger weist eine Rückenteil, eine Sitzfläche sowie ein Fußteil auf, wobei das Fußteil gegenüber dem Kraftfahrzeugboden stets abgestützt werden muss. Hierdurch wird bedingt, dass das Fußteil lediglich in seiner Neigung geringfügig veränderbar ausgebildet ist. Am Fußteil selbst sind Aussparungen vorgesehen, in welche eine abnehmbare Fußauflagefläche lösbar fixiert werden kann. Der hier beschriebene Träger erweist sich dahingehend als nachteilig, dass insbesondere die Verbindung zwischen Sitzfläche und Fußteil statisch bzw. nur geringfügig verschwenkbar ausgebildet ist. Sitzen Kleinkinder in dem auf dem Träger anzuordnenden Kindersitz, sind deren Beine in der Regel zu kurz, um die Füße auf der Fußauflagefläche abzustellen. Dies wird durch die geringe Neigungsmöglichkeit bzw. die Steifheit des Fußteils bedingt. Die kurzen Beine des Kleinkindes ragen im Wesentlichen horizontal nach vorne und werden durch die starre Abwinklung von Fußteil und Sitzfläche abgedrückt. Dies führt dazu, dass insbesondere bei langen Fahrten die Kleinkinder unruhig werden und Schmerzen an den Beinrückseiten ausbilden.

Aus diesem Grund liegt der vorliegenden Erfindung die Aufgabe zugrunde, eine Kindesitzunterlage bereit zu stellen, welche einerseits sicher an einem Kraftfahrzeugsitz, unterhalb eines Kindersitzes, angeordnet werden kann, und welche zugleich eine besonders einfache, komfortable und verlässliche Anpassung der Fußabstützung in Abhängigkeit der Kinderbeinlänge ermöglicht. Zugleich ist es Aufgabe der vorliegenden Erfindung den Kraftfahrzeugsitz zu schonen und vor Abnutzung durch den Kindersitz zu schützen.

Diese Aufgabe wird gemäß den Merkmalen des Patentanspruchs 1 gelöst.

Die erfindungsgemäße Kindersitzunterlage für einen in einem Kraftfahrzeug angeordneten Kindersitz zum Ablegen von Kinderbeinen und/oder zum Abstellen von Kinderfüßen weist wenigstens ein Rückenteil zum zumindest teilweisen, rückwärtigen Überspannen eines Rückenlehnenbereichs eines Kindersitzes, wenigstens ein mit dem Rückenteil in Verbindung stehendes Sitzunterteil zum unterseitigen Anordnen der Kindersitzunterlage zwischen Kindersitz und Fahrzeugsitzfläche, sowie wenigstens ein beweglich ausgebildetes Fußpositionierteil zum Auflegen von Kinderbeinen und/oder zum Abstellen von Kinderfüßen auf, wobei das Fußpositionierteil schwenkbar an dem Sitzunterteil angelenkt ist und gegenüber diesem in wenigstens einer Neigungsposition veränderbar ausgebildet ist. Vorteilhaft sind Rückenteil und Sitzunterteil derart miteinander verbunden, dass Rückenteil und Sitzunterteil gegeneinander verschwenkbar sind.

Unter einer Kindersitzunterlage wird erfindungsgemäß ein zumindest teilweise mehrlagiges und/oder zumindest teilweise gepolstertes textiles Flächengebilde verstanden, welches in einer Gebrauchsposition zwischen einem Kinderrückhaltesystem, beispielsweise einem Kindersicherheitssitz oder einer Kindersitzerhöhung, und einem Fahrzeugsitz eines Kraftfahrzeugs angeordnet ist. Vorteilhaft wird die hier beschriebene Kindersitzunterlage auf einem Fahrzeugsitz angeordnet und so in Gebrauchsposition verbracht. Auf der so ausgerichteten Kindersitzunterlage kann dann der Kindersitz oder jegliche weitere Kinderrückhaltesysteme, wie beispielsweise Sitzerhöhungen, positioniert werden. Alternativ ist auch denkbar, dass die hier beschriebene Kindersitzunterlage an der dem Sitzbereich abgewandten Rückseite eines Kinderrückhaltesystems, insbesondere eines Kindersitzes, angeordnet und fixiert wird und somit ihre Gebrauchsposition einnimmt. In diesem Fall wird die Kindersitzunterlage erst mit Fixierung des Kinderrückhaltesystems an dem Fahrzeugsitz zwischen diesem und dem Kinderrückhaltesystem angeordnet und positioniert.

Weiterhin vorteilhaft ist das Fußpositionierteil schwenkbar an dem Sitzunterteil angelenkt, sodass auch das Fußpositionierteil gegenüber dem Sitzunterteil bzw. das Sitzunterteil gegenüber dem Fußpositionierteil in einer Neigungsposition verschwenkbar ist. Somit wird die Basis der Kindersitzunterlage durch Rückenteil, daran angeordnetem Sitzunterteil und wiederrum an dem Sitzunterteil angeordneten Fußpositionierteil ausgebildet.

Um eine bestmögliche Flexibilität gegenüber den Fahrzeugsitzen unterschiedlicher Fabrikate zu ermöglichen und auch deren Bezug zu schützen, ist die jeweilige Verschwenkung der einzelnen Teile gegeneinander besonders vorteilhaft.

Das Rückenteil ist derart ausgebildet, dass es einen Rückenlehnenbereich eines Kinderrückhaltesystems, vorteilhaft eines Kindersitzes zumindest teilweise, vorteilhaft vollständig überspannt und/oder überdeckt. Das Rückenteil der Kindersitzunterlage ist folglich größer ausgebildet als der rückwärtige Rückenlehnenbereich des entsprechenden Kindersicherheitssitzes.

Das an dem Rückenteil angeordnete Sitzunterteil ist weiterhin zwischen Fahrzeugsitzfläche und Unterseite des Kindersicherheitssitzes angeordnet. Dies verhindert vorteilhaft den direkten Kontakt zwischen Kindersitz und Fahrzeugsitzoberfläche, wodurch eine Sitzschonung bedingt wird.

Unter Gebrauchsposition ist vorteilhaft diejenige Position zu verstehen, in welcher die Kindersitzunterlage auf einem Fahrzeugsitz und/oder an einem Kindersitz angeordnet und fixiert ist. Die Kindersitzunterlage ist dann bereit zur entsprechenden Benutzung.

Der Kerngedanke der vorliegenden Erfindung liegt darin, dass das Fußpositionierteil als Klappelement ausgebildet ist, dessen wenigstens zwei Klappbereiche um eine gemeinsame Rotationsachse gegeneinander verschwenkbar ausgebildet sind. Durch das Vorsehen des Fußpositionierteils als Klappelement ist es überraschenderweise erstmals gelungen, das Fußpositionierteil in Abhängigkeit der Kinderbeinlänge besonders einfach und schnell anzupassen. Darüber hinaus gewährt die Ausbildung als Klappelement auch eine besonders schnelle und einfache Faltung der Kindersitzunterlage, so dass diese bei Nichtbenutzung platzsparend im Kraftfahrzeug verstaut werden kann.

Ergänzend ist die Neigung wenigstens eines Klappbereichs anpassbar ausgebildet, sodass auch eine von der Horizontalen verschiedene Neigung eingestellt werden kann.

Dies ist insbesondere dann von Vorteil, wenn es zur Ablage von längeren Kinderbeinen auf dem Fußpositionierteil kommt. Durch die mögliche Schrägstellung der Klappbereiche des Fußpositionierteils können in besonders angenehmer Weise auch die Unterschenkel von Kindern abgestützt werden, ohne dass es zu ungewollten Druckstellen in den Kniekehlen kommt, wie es beispielsweise bei rein horizontalen Fußpositionierteilen der Fall wäre.

Selbstverständlich ist alternativ auch eine Anordnung wenigstens eines Klappbereichs in der Horizontalen möglich. Dies ist dann notwendig, wenn das Fußpositionierteil lediglich zum Abstellen von Kinderfüßen benutzt wird. Letzteres ist insbesondere bei noch kleineren Kindern mit kürzeren Beinen der Fall. Bei größeren Kindern ist das schräg stellbare Fußpositionierteil, wie oben bereits erwähnt, vorteilhaft für die Beinablage bei längeren Fahrten. Ein Einschlafen der Gliedmaßen wird entsprechend vorteilhaft verhindert und die Sitzposition deutlich verbessert.

Hierzu sind die beiden Klappbereiche aneinander angeordnet und weisen einen gemeinsamen Fixierungsbereich auf. Dieser gemeinsame Fixierungsbereich ist steht wiederrum mit dem Sitzunterteil in Verbindung. Dies kann beispielsweise direkt erfolgen, so dass der gemeinsame Fixierungsbereich, durch welchen auch die gemeinsame Rotationsachse verläuft, an dem Sitzunterteil fixiert, beispielsweise vernäht ist. Es ist aber auch denkbar, dass eine indirekt Fixierung vorgesehen ist und beispielsweise noch ein Verlängerungsmodul zwischen Sitzunterteil und dem gemeinsamen Fixierungsbereich angeordnet ist.

Weitere vorteilhafte Ausführungsformen ergeben sich aus den Unteransprüchen.

Bei einer weiteren vorteilhaften Ausführungsform weist das Fußpositionierteil weiterhin wenigstens ein Stützmittel auf, welches die beiden Klappbereiche, neben dem gemeinsamen Fixierungsbereich, lösbar miteinander verbindet und zugleich voneinander beabstandet. Das Fußpositionierteil weist hierzu einen ersten Klappbereich auf, welcher zum Ablegen von Kinderbeinen und/oder zum Abstellen von Kinderfüßen ausgebildet ist. Der zweite, daran verschwenkbar angelagerte Klappbereich dient der Stabilisierung des Fußpositionierteils im Fußraum während des aufgeklappten Zustands. Ergänzend ist ein Stützmittel vorgesehen. Dieses Stützmittel ist lösbar mit den beiden Klappbereichen verbunden. Besonders vorteilhaft wird das Stützmittel an den beiden, einander gegenüberliegenden Innenflächen der jeweiligen Klappbereiche lösbar fixiert, beispielsweise über Druckknöpfe oder Klettverschlüsse. Das Stützmittel ist vorteilhaft eigensteif ausgebildet, sodass bei Anordnung zwischen den beiden Klappbereichen eine ausreichende Kraftabführung sicherstellt und auch eine ausreichende Stabilität des Fußpositionierteils sichergestellt ist.

Ist die Sitzunterlage in Gebrauchsposition, beispielsweise auf einem Fahrzeugsitz, angeordnet und fixiert, so kann in einem nächsten Schritt das Fußpositionierteil in der benötigten Position eingestellt werden. Hierzu werden die beiden, sich im Fußraum befindlichen Klappbereiche auseinander geführt und aufgeklappt. Der obere, erste Klappbereich dient zur Fuß- und/oder Beinablage. Der dazu verschwenkte, zweite Klappbereich wird dann an oder gegen die Rückwand des Fußraums in Richtung Heck geführt. In Abhängigkeit der gewünschten Neigung des ersten Klappbereichs wird dann das Stützmittel zwischen beiden Klappbereichen eingeführt und befestigt. Hierdurch spannen, im Querschnitt betrachtet, die beiden Klappbereiche und das Stützmittel ein Dreieck auf. Dies stellt sicher, dass die auf den ersten Klappbereich einwirkende Kraft von den Füßen, beispielsweise auch durch Tritte verursacht, besonders effektiv und schnell über das Stützmittel und den zweiten Klappbereich an den Fußraum übertragen und abgeführt werden kann. Folglich ist das Stützmittel auch als Kraftabführungsmittel zu verstehen. Der zweite Klappbereich kann daher auch als Stabilisierungsmittel und/oder Kraftabführungsmittel verstanden werden.

Das Stützmittel ist im einfachsten Fall plattenförmig als eigensteife Kraftabführungsplatte ausgebildet. Die Kraftabführungsplatte weist vorteilhaft an ihren beiden einander gegenüberliegenden Längsseiten jeweils wenigstens ein Fixierungselement auf, beispielsweise ein Klett- und/oder Flauschband oder Teile von Druckknöpfen. Besonders vorteilhaft weisen die beiden innenliegenden Oberflächen der Klappbereiche die hierzu komplementär ausgebildeten Fixierungsmittel auf.

Erfindungsgemäß sind die Längsseiten des Stützmittels zumindest teilweise verschwenkbar ausgebildet. Durch diese Verschwenkung kann das Stützmittel besonders einfach und präzise zwischen den beiden Klappbereichen an deren Innenseiten angeordnet werden. Hierzu ist ein längsseitiger Abschnitt des Stützmittels parallel zum ersten Klappbereich und an diesem angeordnet. Zudem ist ein weiterer längsseitiger Abschnitt des Stützmittels parallel zum zweiten Klappbereich und an diesem angeordnet. Besonders vorteilhaft handelt es sich hierbei um längsseitige Randbereiche des Stützmittels, an denen auch die Fixierungsmittel vorgesehen sind.

In einer weiteren vorteilhaften Ausführungsform spannt das Stützmittel mit beiden Klappbereichen ein gleichseitiges Dreieck oder ein rechtwinkliges Dreieck auf.

Im Falle eines rechtwinkligen Dreiecks spannen die beiden Klappbereiche zueinander einen 90°-Winkel auf, wohingegen das Stützmittel die Hypotenuse bildet. In diesem Fall ist der erste Klappbereich in horizontaler Ausrichtung angeordnet. Diese horizontale Ausrichtung ist besonders vorteilhaft für Kleinkinder mit kurzen Beinen, da diese auf diese horizontale Klappbereichsfläche ihre Füße einfach und bequem aufstellen können. Somit kann eine besonders ergonomische Sitzposition, auch über längere Fahrtzeiten, sichergestellt werden.

Wird das Kinderrückhaltesystem allerdings von größeren Kindern benutzt, so hat es sich dann als vorteilhaft erwiesen, dass die beiden Klappbereiche zueinander einen Winkel von 60° einnehmen und auch die Winkel des ersten Klappbereichs zum Stützmittel und des zweiten Klappbereichs zum Stützmittel ebenfalls 60°aufspannen. In diesem Fall bildet der erste Klappbereich eine schräge, nach vorne unten geneigte Ebene aus. Diese ist besonders vorteilhaft wenn größere Kinder mit längeren Beinen über längere Fahrtzeiten transportiert werden. Dann können diese bequem die Unterschenkel an der schrägen Ebene anlehnen und somit zusätzlich eine bequeme Sitzposition einnehmen.

In beiden Ausführungsvarianten bildet der zweite Klappbereich mit dem Fußraum des Fahrzeugsitzes eine gemeinsame Kontaktfläche aus und liegt beispielsweise im Fußraum an der dem Heck zugewandten Rückwand des Fußraums an. Der zweite Klappbereich in Kombination mit dem Stützmittel dient somit der Stabilisierung und der Kraftabführung, welche auf den ersten Klappbereich beim Abstellen der Füße und/oder beim Ablegen der Beine eingeführt wird.

Bei einer weiteren vorteilhaften Ausführungsform weist jeder Klappbereich eine Materialverdickung an einer Innenseite auf, wobei die Materialverdickungen spiegelsymmetrisch zueinander ausgebildet sind. Die Materialverdickungen können beispielsweise aufgepolstert oder mit einer Schaumfüllung ausgebildet sein. Das Vorsehen einer derartigen Materialverdickung an einer jeden Innenseite eines Klappbereichs ist von Vorteil, da an dieser Materialverdickung das Stützelement lösbar angeordnet werden kann. Hierdurch wird eine besonders stabile und kraftableitende Verbindung zwischen Stützmittel und Klappbereichen ausgebildet. Im einfachsten Fall ist die Materialverdickung in ihrem Querschnitt halbrund ausgebildet. Sie kann sich über die gesamte Längsseite der Klappbereiche erstrecken oder aber auch nur in Teilen vorgesehen sein. In Abhängigkeit von der jeweiligen Geometrie der jeweiligen Klappbereiche sind die Materialverdickungen vorteilhaft in der Nähe des äußeren Randbereichs vorgesehen.

Die Funktion der Materialverdickungen liegt darin, dass diese als Orientierung für die Fixierung des Stützmittels dienen. Im einfachsten Fall wird das Stützmittel über entsprechende Fixierungsmittel an den beiden Materialverdickungen der Innenflächen der Klappbereiche angeordnet und spannt so ein Dreieck auf. Als Materialverdickung können beispielsweise Aufpolsterungen oder aber auch das Anbringen von Klettund/oder Flauschbändern und/oder Druckknopfteilen verstanden werden. Weiterhin dienen die Materialverdickungen als Abstandshalter des Stützmittels, so dass dieses leichter zwischen den beiden Klappbereichsinnenflächen angeordnet und fixiert werden kann.

Bei einer weiteren vorteilhaften Ausführungsform weisen die Klappbereiche innenliegende Verstärkungsmittel auf. Im einfachsten Fall ist in jedem Klappbereich nur ein Verstärkungsmittel vorgesehen. Es ist aber auch denkbar, dass lediglich im ersten Klappbereich, auf welchem die Füße oder Beine abgestellt bzw. abgelegt werden, vorgesehen ist. Als geeignete Verstärkungsmittel können Kunststoffe mit einer Eigensteifigkeit vorgesehen sein. Alternativ ist denkbar, dass das Verstärkungsmittel in Sandwichform ausgebildet ist. Hierzu können mehrere Materialschichten vorgesehen sein, beispielsweise in der Abfolge Kartonmaterial - Schaummaterial (natürlich und/oder synthetisch) - Kartonmaterial. Ergänzend kann auf einem derart biegefesten Verstärkungsmittel noch ein weiterer Kunststoff, beispielsweise ein Polsterschaum, angeordnet sein, sodass das Ablegen der Beine bzw. das Aufstellen der Füße besonders angenehm und gedämpft ist. Auch bei dem Vorsehen von Kunststoffverstärkungsmitteln kann die Sandwichform Anwendung finden. Hier ist beispielsweise die Materialabfolge Kunststoffplatte - Schaummaterial (natürlich und/oder synthetisch) - Kunststoffplatte angeordnet sein.

Zugleich wird durch das Verstärkungsmittel auch die nötige Stabilität der Klappbereiche sichergestellt, sodass auch bei stärkeren Tritten der Kinderfüße die Klappbereiche formstabil verbleiben und das Fußpositionierteil nicht in sich zusammenklappt. Besonders vorteilhaft weist auch das Stützmittel ein entsprechendes Verstärkungsmittel auf. Hierbei kann es sich um das gleiche Material des Verstärkungsmittels wie bei den Klappbereichen handeln oder es kann auch ein stärkeres stabileres Material, wie ein Kunststoff aus Polyurethan, vorgesehen sein. Die Verstärkungsmittel sind vorteilhaft innenliegend, also innerhalb der Kindersitzunterlage, angeordnet.

Bei einer weiteren vorteilhaften Ausführungsform ist zwischen Fußpositionierteil und Sitzunterteil wenigstens ein die beiden Teile verbindende Längenveränderungsmodul angeordnet. Dieses Längenveränderungsmodul ist von Vorteil, wenn der Abstand zwischen Fußpositionierteil und Sitzunterteil aufgrund des wachsenden Kindes anzupassen ist. Die hier beschriebene Kindersitzunterlage ist somit mitwachsend ausgebildet. Das Längenveränderungsmodul weist vorteilhaft ein Betätigungsmittel auf. Wird dieses Betätigungsmittel entsprechend bedient, kann der Abstand zwischen Sitzunterteil und Fußpositionierteil erweitert und/oder verkürzt werden.

Im einfachsten Fall ist das Betätigungsmittel beispielsweise als Reißverschluss oder Druckknöpfe ausgebildet. Wird nun der Reißverschluss geöffnet, so wird der Abstand zwischen Sitzunterteil und Fußpositionierteil, welcher bisher durch den geschlossenen Reißverschluss vorgegeben war, verlängert und aufgeweitet.

Um dies zu ermöglichen sind Sitzunterteil und Fußpositionierteil, vorteilhafter der gemeinsame Fixierungsbereich der beiden Klappbereiche aneinander, über eine Textilverlängerung miteinander verbunden. Mit Öffnen des Reißverschlusses kommt die Textilverlängerung zum Tragen. Die Textilverlängerung ist im einfachsten Fall aus dem gleichen Material wie die Kindersitzunterlage ausgebildet. Die Textilverlängerung ist an der Unterseite, unterhalb des Reißverschlusses, dem Fahrzeugsitz zugewandt, am Sitzunterteil und an dem Fußpositionierteil angeordnet. Die Geometrie der Textilverlängerung selbst gibt den eigentlichen Verlängerungsweg vor, mit welcher das Sitzunterteil vom Fußpositionierteil beabstandet werden kann. Zugleich ist dieser reversibel ausgebildet.

Wird der Reißverschluss wieder geschlossen, so bestimmt der Reißverschluss den Abstand zwischen Sitzunterteil und Fußpositionierteil.

In einer weiteren vorteilhaften Ausführungsform weist das Sitzunterteil und/oder das Rückenteil jeweils wenigstens zwei Polstermittel auf. Dies ist von Vorteil, da hierdurch das Gewicht des Kinderrückhaltesystems, insbesondere des Kindersitzes, zusätzlich gedämpft wird, sodass auf dem Fahrzeugsitz selbst die Druckstellenbildung verhindert wird. Darüber hinaus sind die Polstermittel auch dafür vorgesehen als Energieabsorptionsmittel zu wirken. Findet beispielsweise ein Unfall statt und wird somit eine kurze Kraftbeaufschlagung auf das Kinderrückhaltesystem induziert, so wird der Kraftimpuls von den Polstermitteln zumindest teilweise absorbiert und dann an den Fahrzeugsitz weitergeleitet. Somit kann ein Aufprall erfolgreich abgeschwächt werden.

Hierbei hat es sich als besonders vorteilhaft erwiesen, das Rückenteil zu unterteilen, sodass zwei Polstermittel vorgesehen sind. Die beiden Polstermittel werden vorteilhaft durch einen polsterfreien Abschnitt voneinander beabstandet und weisen somit keine gemeinsame Kontaktfläche auf. Die Polstermittel sind innerhalb der Kindersitzunterlage angeordnet.

Im einfachsten Fall ist der polsterfreie Abschnitt aus Textil ausgebildet und beispielsweise in den Seitenbereichen, zu den jeweiligen Polstermitteln hin, abgesteppt oder vernäht. So können die Polstermittel in der korrekten Position gehalten werden. Unter Textil ist in der hier beschriebenen Erfindung jegliche Art an Stoff, beispielsweise gewirkt, gewebt, gelegt oder dgl., oder sonstiges Material zu verstehen, welches sich zur Ausbildung der hier beschriebenen Kindersitzunterlage zu dieser verarbeiten lässt.

Besonders vorteilhaft hat es sich erwiesen, den polsterfreien Abschnitt in horizontalem Verlauf mittig entlang Rückenteil vorzusehen. Diese Anordnung ist besonders dann von Vorteil, da durch den polsterfreien Abschnitt zusätzlich eine gewisse Flexibilität des Rückenteils bereitgestellt und die Anpassung an den Fahrzeugsitz selbst erleichtert wird.

Darüber hinaus bieten die Polstermittel insbesondere bei einem rückwärts gerichteten Kinderrückhaltesystem, auch Reboarder genannt, eine ausreichende Polstermöglichkeit der Kinderfüße im Falle eines Aufpralls. Auch in diesem Fall wird die eingetragene Kraft über die Kindersitzauflage zumindest teilweise gedämpft und abgeführt.

Auch das Sitzunterteil weist vorteilhaft zwei Polstermittel auf. In der einfachsten Ausführungsform sind die Polstermittel des Sitzunterteils gleich zu den Polstermitteln des Rückenteils ausgebildet. Die Polstermittel sind auch bei dem Sitzunterteil über einen polsterfreien Abschnitt voneinander beabstandet. Dieser polsterfreie Abschnitt ist vorteilhaft horizontal ausgerichtet und verläuft mittig entlang des Sitzunterteils.

Selbstverständlich sind auch die für die Polstermittel des Rückenteils beschriebenen Funktionen auf die Polstermittel des Sitzunterteils zu übertragen und analog anzuwenden. Als besonders vorteilhaft hat es sich erwiesen, den polsterfreien Abschnitt in einer Breite von 1,5 cm - 10 cm, vorteilhaft von 5 cm vorzusehen. Bei diesem Größenbereich kann zusätzlich noch eine besonders leichte Zusammenfaltung der Sitzunterlage gewährleistet werden. So kann die Sitzunterlage auch problemlos auf ein kleines Volumen zusammengefaltet werden und ist leicht verstaubar.

Zugleich ist der polsterfreie Abschnitt auch verstärkungsmittelfrei ausgebildet. Hierdurch kann eine verbesserte Passform der Kindersitzunterlage an den Fahrzeugsitzpolstern und zugleich auch am Kindersitz sichergestellt werden. Die hier beschriebene Kindersitzunterlage weist somit eine hohe Biegsamkeit unter Beibehaltung von sicherheitstechnisch relevanten Merkmalen auf.

In einer weiteren vorteilhaften Ausführungsform weisen das Rückenteil und/oder das Sitzunterteil an der dem Kindersitz zugewandten Oberfläche und/oder an der dem Kindersitz abgewandten Oberfläche wenigstens eine Oberflächenmodifizierung auf. Unter Oberflächenmodifizierung kann jegliche Art an Oberflächenveränderung verstanden werden, welche das ursprüngliche Textilmaterial verändert. Im einfachsten Fall ist die Oberflächenmodifizierung als zusätzlicher Materialauftrag ausgebildet. Dies kann beispielsweise durch ein weiteres Textil oder aber auch durch Beflockung oder andere Art an Strukturierung erfolgen. Der Materialauftrag selbst kann weiterhin aufgenäht, aufgeklebt oder in sonstiger Weise physikalisch und/oder chemisch fixiert sein.

Als besonders vorteilhaft hat es sich erwiesen, eine Oberflächenmodifizierung am Sitzunterteil und zwar an der dem Kindersitz zugewandten Oberfläche auszubilden. Besonders bevorzugt ist in diesem Fall die Oberflächenmodifizierung als fixiertes, weiteres Textil ausgebildet. Der hier eingesetzte Stoff weist eine rutschhemmende Oberflächenbeschaffenheit auf. Hierdurch kann erfolgreich sichergestellt werden, dass der Kindersitz, welcher auf der Kindersitzunterlage angeordnet ist, auch bei schnelleren Fahrten in Kurvenlage oder gar bei Unfällen besonders sicher auf der Kindersitzunterlage gehalten ist und ein Verrutschen oder sogar Herabgleiten des Kindersitzes von der Kindersitzunterlage verhindert wird. Der Stoff ist hierzu an vier Abschnitten der Oberfläche des Sitzunterteils angeordnet, welche jeweils für sich getrennt und voneinander beabstandet ausgebildet sind. Der Stoff ist vorteilhaft mit der Oberfläche des Sitzunterteils vernäht. Dies bringt einen zusätzlichen ästhetischen Effekt und ist besonders kostengünstig.

Weiterhin ist denkbar, dass die Kindersitzunterlage wenigstens ein Haltemittel aufweist. Dieses Haltemittel kann am Rückenteil und/oder am Sitzunterteil angeordnet sein. Dieses Haltemittel dient dazu, die Kindersitzunterlage an einem Kindersitz und/oder an einem Kraftfahrzeugsitz anzuordnen. Ist das Haltemittel am Rückenteil der Kindersitzunterlage angeordnet, so ist es beispielsweise als Gurt mit einem Schnappund/oder Klickmechanismus oder auch als elastischer Gurt ausgebildet. Soll nun die Kindersitzunterlage an einem Fahrzeugsitz angeordnet werden, so wird der elastische Gurt über eine Kopfstütze bzw. der Gurt mit einem Schnapp- und/oder Klickmechanismus geöffnet und um eine Kopfstütze herum geführt und wieder verschlossen. Das Haltemittel dient somit der zusätzlichen Sicherung der Kindersitzunterlage während des Gebrauchs und vermeidet insbesondere ein Verrutschen oder Herabgleiten während der Anpassung des Fußpositionierteils.

In Abhängigkeit der Kopfstützen ist der Gurt mit einem Schnapp- und/oder Klickmechanismus in seiner Länge veränderbar und kann geöffnet werden. Alternativ ist auch denkbar, dass das Haltemittel in Form von Haken und Ösen ausgebildet ist, welches mit dem Kindersitz und/oder den Fahrzeugsitzpolster in Wirkverbindung gebracht werden kann. Ferner ist auch denkbar, dass das Haltemittel in dem Rückenteil integriert ist. Dies ist besonders dann von Vorteil, wenn der Gurt elastisch, beispielsweise als Gummizug, ausgebildet ist. In beiden Alternativen ist das Haltemittel vorteilhaft im oberen Rückenteilabschnitt, vorteilhaft im oberen Drittel bis oberen Achtel des Rückenteils angeordnet.

Selbstverständlich ist dies nicht begrenzend zu verstehen, sodass es auch denkbar ist, einen elastischen Gurt über das Rückenteil bzw. über die Kopfstütze eines Kinderrückhaltesystems zu führen und so die Kindersitzunterlage entsprechend zu befestigen.

Darüber hinaus ist auch denkbar, dass die Kindersitzunterlage weiterhin wenigstens eine Tasche mit seitlicher und/oder rückwärtiger Öffnung aufweist. Dies ist besonders für die Klappbereiche des Fußpositionierteils von Vorteil, da über diese Tasche die Verstärkungsmittel aus den Klappbereichen entnommen werden können. Gleiches gilt auch für das Ebenfalls hier beschriebene Stützmittel. Die Entnahme der Verstärkungsmittel ist von Vorteil, da hierdurch ein besonders leichtes Reinigen oder sogar Waschen der Kindersitzunterlage ohne die eigensteifen Verstärkungselemente sichergestellt werden kann.

Weiterhin kann es sich als vorteilhaft erweisen, an der Rückseite des Sitzunterteils, also an der Oberfläche, welche dem Fahrzeugsitz zugewandt ist und welche mit diesem eine gemeinsame Kontaktfläche ausbildet, eine weitere Oberflächenmodifizierung vorzusehen. Hierbei hat es sich als besonders vorteilhaft erwiesen, diese Oberflächenmodifizierung über die gesamte Unterseite des Sitzunterteils auszubilden. Um eine zusätzliche, verbesserte Antirutschfunktion der Kindersitzunterlage auf dem Fahrzeugsitz sicherzustellen, ist die Oberflächenmodifizierung als hexagonales, rutschhemmendes Netz ausgebildet. Dieses ist vorteilhaft umlaufend an der Unterseite des Sitzunterteils angeordnet und erstreckt sich sowohl über die innerhalb des Sitzunterteils angeordneten Polstermittel und über den polsterfreien Abstand. Vorteilhaft ist das rutschhemmende Netz am polsterfreien Abschnitt fixiert, beispielsweise vernäht. Um eine besonders sichere rutschhemmende Funktion sicherzustellen, ist das Netz aus Kunststoff ausgebildet und weist eine hexagonale Lochstruktur auf. Durch die hexagonale Ausbildung kann eine besonders gute Kraftableitung und somit Rutschhemmung gewährleistet werden.

Schließlich ist es auch noch denkbar, dass an der Rückseite der Kindersitzunterlage, also an der dem Fahrzeugsitz zugewandten Unterseite, wenigstens ein Laschenfortsatz zwischen Rückenteil und Sitzunterteil angeordnet ist. Dieser Laschenfortsatz ist vorteilhaft tropfenförmig ausgebildet und weist wenigstens ein Energieabsorptionsmittel auf. Dieses kann beispielsweise als Schaum oder anderweitiges Polstermittel ausgebildet sein. Der Laschenfortsatz dient vorteilhaft zur zusätzlichen Stabilisierung der Kindersitzunterlage. Hierzu kann der Laschenfortsatz in den Spalt zwischen Rückenlehne und Sitzteil eines Fahrzeugsitzes eingeführt werden. Durch die rutschhemmende Oberfläche bleibt der Laschenfortsatz verlässlich in dem Spalt angeordnet. Somit wird in ein unerwünschtes Verrutschen der Kindersitzunterlage verhindert.

Weitere Ausführungsbeispiele und Erklärungen sind der nachfolgenden Zeichnung zu entnehmen. Hierin zeigen:
- Fig. 1: eine schematische Draufsicht einer ersten Ausführungsform einer Kindersitzunterlage;
- Fig. 2: eine schematische Draufsicht einer weiteren Ausführungsform einer Kindersitzunterlage; und
- Fig. 3: eine schematische perspektivische Ansicht der Ausführungsform der Kindersitzunterlage aus Fig. 2.

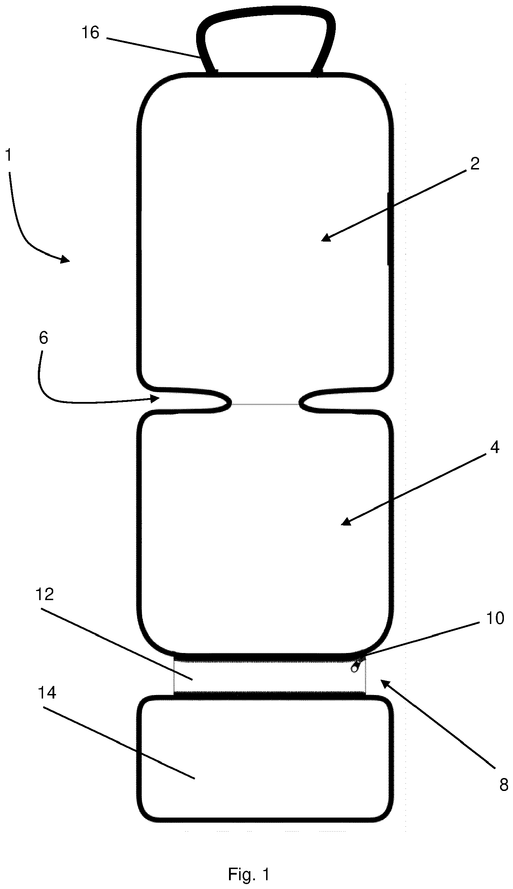

In Fig. 1 ist eine Draufsicht einer Ausführungsform der erfindungsgemäßen Kindersitzunterlage 1 gezeigt. Die Kindersitzunterlage 1 ist mehrteilig ausgebildet. Sie weist ein Rückenteil 2 auf, an welchem das Sitzunterteil 4 verschwenkbar angeordnet ist. Besonders vorteilhaft ist zwischen Rückenteil 2 und Sitzunterteil 4 eine beidseitige Materialverjüngung 6 vorgesehen. Dies Materialverjüngung 6 oder auch Aussparung dient der verbesserten Anpassung der Kindersitzunterlage 1 auf einem Fahrzeugsitz (nicht gezeigt). Zudem stellen diese beiden Materialverjüngungen 6 oder auch Aussparungen sicher, dass die Gurtführung im Fahrzeug nicht durch die Kindersitzunterlage 1 behindert wird.

An das Sitzunterteil 4 schließt sich das Verlängerungsmodul 8 an. Das Verlängerungsmodul 8 ist in diesem Fall im geöffneten, verlängerten Zustand gezeigt. Das Betätigungsmittel 10 ist in diesem Ausführungsbeispiel als Reißverschluss ausgebildet, welcher hier geöffnet vorliegt. Durch die Öffnung des Reißverschlusses 10 wird das Verlängerungstextil 12 frei und kann gespannt werden. Vorteilhaft ist das Verlängerungstextil 12 um ein Vielfaches größer ausgebildet, als das geschlossene Betätigungsmittel 10. Somit kann mit Öffnen des Betätigungsmittels 10 auch der Abstand zwischen Sitzunterteil 4 und Fußpositionierteil 14 verändert, insbesondere verlängert werden. Diese Verlängerung ermöglicht und begrenzt das Verlängerungstextil 12.

Ist hingegen eine Verlängerung nicht mehr gewünscht, beispielsweise wenn die Kindersitzunterlage 1 von einem Kleinkind benutzt werden soll, so wird in besonders einfacher Weise das Betätigungsmittel, hier der Reißverschluss 10, wieder geschlossen. Das Verlängerungstextil 12 wird unterhalb des Reißverschlusses wieder zusammengeführt und unterhalb des Betätigungsmittels 10 verbracht.

Am oberen Ende des Rückenteils 2 ist exemplarisch ein Haltemittel 16 vorgesehen, welches als elastischer Gurt oder auch als Gurt mit einem Klick- und/oder Schnappmechanismus ausgebildet sein kann. Dieses Haltemittel 16 dient dazu, die Kindersitzunterlage 1 mit dem Fahrzeug, insbesondere dem Fahrzeugsitz, oder aber auch mit dem Kindersitz in Wirkverbindung zu bringen.

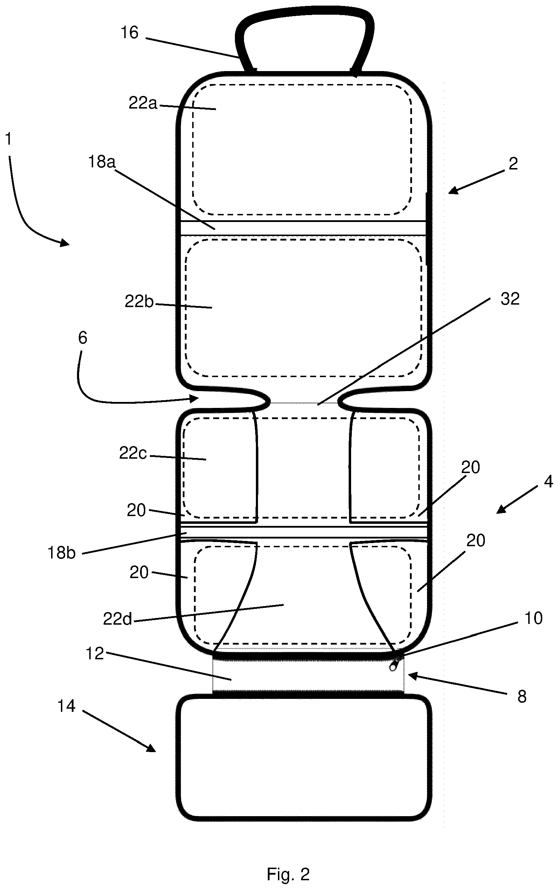

In Fig. 2 ist eine weitere Draufsicht auf eine Kindersitzunterlage 1 gezeigt. Hierbei handelt es sich um eine weitere Ausführungsform, bei welcher sowohl Rückenteil 2 als auch Sitzunterteil 4 mit entsprechenden polsterfreien Abschnitten 18 und zusätzlich auch mit einer Oberflächenmodifizierung 20 versehen sind. Gleiche Bezugszeichen wie zuvor entsprechen gleichen Bauteilen und werden nicht erneut erklärt.

Das Rückenteil 2 in Fig. 2 zeigt einen horizontal angeordneten polsterfreien Abschnitt 18a, welcher die beiden innenliegenden Polstermittel 22a, 22b voneinander beabstandet. Beide Polstermittel 22a, 22b sind innerhalb des Rückenteils angeordnet und werden beidseitig von einem Textil überspannt. Das Textil bilden die Oberfläche der Kindersitzunterlage 1 ist vorteilhaft aus Kunststoff ausgebildet und kann somit leicht gereinigt und abgewaschen werden.

Das Sitzunterteil 4 weist zwei weitere Polstermittel 22c, 22d auf, welche ebenfalls durch einen horizontal angeordneten, polsterfreien Abschnitt 18b voneinander getrennt sind. Auch hier sind die beiden Polstermittel 22c, 22d innerhalb des Sitzunterteils 4 angeordnet und beidseitig von einem Textil überspannt. Der Übergang 24 zwischen Rückenteil 2 und Sitzunterteil 4 ist als Materialverjüngung 6 bzw. ebenfalls als polsterfreier Bereich ausgebildet. Somit kann ein besonders leichtes Verschwenken des Rückenteils 2 gegenüber dem Sitzunterteil 4 oder umgekehrt sichergestellt werden. Die Kindersitzunterlage 1 kann daher besonders leicht der Geometrie des Fahrzeugsitzes folgen, auf welchem sie fixiert werden soll.

Neben dem polsterfreien Abschnitt 18b weist das Sitzunterteil 4 zusätzlich noch eine Oberflächenmodifizierung 20 auf. Diese ist in diesem hier gezeigten Ausführungsbeispiel in vier Abschnitte unterteilt. Jeweils zwei Abschnitte sind spiegelsymmetrisch zueinander angeordnet und an der linken bzw. rechten Seite des Sitzunterteils 4 vorgesehen. Als besonders vorteilhaft hat sich die gezeigte Geometrie der Oberflächenmodifizierung 20 erwiesen, da durch die einerseits rechteckige und auch weiterhin dreieckige Form der Oberflächenmodifizierung 20 eine besonders hohe Stabilität und Rutschfestigkeit des Kinderrückhaltesystems, insbesondere des Kindersitzes (nicht gezeigt), sichergestellt werden kann.

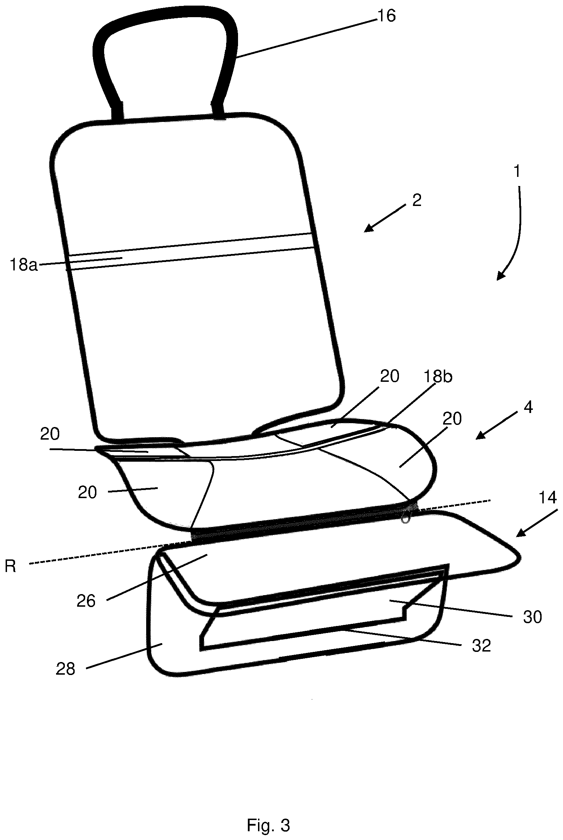

In Fig. 3 ist nunmehr eine perspektivische Ansicht der Kindersitzunterlage 1 aus Fig. 2 gezeigt. In diesem Fall ist die Anordnung der Kindersitzunterlage 1 der tatsächlichen Anordnung auf einem Kraftfahrzeugsitz (nicht gezeigt) nachempfunden. Gleiche Bauteile wie in den vorherigen Figuren weisen gleiche Bezugszeichen auf und werden daher nicht erneut erklärt.

Bei der hier gezeigten Kindersitzunterlage 1 ist das Verlängerungsmodul 8 im geschlossenen Zustand gezeigt. Das Betätigungsmittel 10, auch hier als Reißverschluss ausgebildet, ist in diesem Fall verschlossen, sodass sich ein Abstand zwischen Sitzunterteil 4 und Fußpositionierteil 14 lediglich in der Breite des geschlossenen Betätigungsmittels 10 ausbildet. Das Fußpositionierteil 14 ist über den gemeinsamen Fixierungsabschnitt der beiden Klappbereiche 26, 28 aneinander mit dem Betätigungsmittel 10 und zugleich auch mit dem Verlängerungsabschnitt 12 verbunden, beispielsweise vernäht. Gleiches gilt andererseits für das Sitzunterteil.

Darüber hinaus sind in Fig. 3 zusätzlich der erste Klappbereich 26 und der zweite Klappbereich 28 im aufgeklappten Zustand gezeigt. Beide Klappbereiche 26 und 28 sind über das Stützmittel 30 voneinander beabstandet und werden zugleich von dem Stützmittel 30 in der gezeigten, aufgeklappten Position gehalten. Hierzu ist das Stützmittel 30 vorteilhaft plattenförmig ausgebildet.

Weiterhin ist das Stützmittel 30 an den beiden Innenseiten, also an den einander zugewandten Oberflächen der beiden Klappbereiche 26, 28, lösbar angeordnet. Diese lösbare Anordnung kann im einfachsten Fall über einen Klettverschluss erfolgen. Hierzu sind die innenliegenden, einander zugewandten Oberflächen des ersten und zweiten Klappbereichs 26 und 28 bereits mit entsprechend aufgerauter Oberfläche vorgesehen.

Das entsprechend komplementär ausgebildete Klettband (nicht gezeigt) ist an den Längsseiten 32 des Stützmittels 30 vorgesehen. Besonders vorteilhaft sind die Längsseiten 32 parallel zu dem ersten Klappbereich 26 und dem zweiten Klappbereich 28 in fixiertem Zustand angeordnet, wohingegen das restliche Stützmittel 30 eine schräge Ebene aufspannt. Durch diese schräge Ebene können die beiden Klappbereiche 26, 28 voneinander in einem vorbestimmbaren Winkel, vorteilhaft im Bereich von 60° - 90°, beabstandet und gehalten werden.

In Abhängigkeit der Geometrie des Stützmittels 30 können die beiden Klappbereiche 26 und 28 um die gemeinsame Rotationsachse R entsprechend verschwenkt werden, oder aber auch in dem Schwenkwinkel aufeinander zugeführt werden.

Wird das Stützmittel 30 vollständig entfernt, so sind beide Klappbereiche 26 und 28 direkt aufeinander zuführbar und aneinander anliegend angeordnet. Dies ist insbesondere für den Transport von Vorteil, da dann beide Klappbereiche 26, 28 deckungsgleich übereinander angeordnet sind und eine gemeinsame innenliegende Kontaktfläche aufweisen. Als besonders vorteilhaft hat es sich erwiesen, die Längsseiten 32 des Stützmittels 30 in der Länge im Bereich von 25 cm - 32 cm, vorteilhaft von 29 cm auszubilden und die hierzu orthogonal stehende Gesamtbreite des Stützmittels 30 im Bereich von 22 cm - 26 cm, noch vorteilhafter von 24,5 cm vorzusehen. Diese Abmaße sind besonders für die Stabilität des Fußpositionierteils 14 von Vorteil. Hierdurch kann eine besonders leichte Anbringung des Stützmittels 30 zwischen den beiden Klappbereichen 26, 28 erfolgen, wobei eine ausreichende Stabilität gewährleistet wird. Ergänzend können die Längsseiten 32 auch an den Materialverdickungen (nicht gezeigt) der Innenflächen der beiden Klappbereiche angeordnet sein.

### Bezugszeichenliste

- 1: Kindersitzunterlage
- 2: Rückenteil
- 4: Sitzunterteil
- 6: Materialverjüngung/Ausnehmung
- 8: Verlängerungsmodul
- 10: Betätigungsmittel
- 12: Verlängerungstextil
- 14: Fußpositionierteil
- 16: Haltemittel
- 18a - b: polsterfreie Abschnitte
- 20: Oberflächenmodifizierung
- 22a - d: Polstermittel
- 24: Übergang
- 26: erster Klappbereich
- 28: zweiter Klappbereich
- 30: Stützmittel
- 32: Längsseite
- R: Rotationsachse

## Patentansprüche

1. Kindersitzunterlage (1) für einen in einem Kraftfahrzeug angeordneten Kindersitz zum Ablegen von Kinderbeinen und/oder zum Abstellen von Kinderfüßen, wobei die Kindersitzunterlage
a. wenigstens ein Rückenteil (2) zum zumindest teilweisen, rückwärtigen Überspannen eines Rückenlehnenbereichs eines Kindersitzes,
b. wenigstens ein mit dem Rückenteil (2) in Verbindung stehendes Sitzunterteil (4) zum unterseitigen Anordnen der Kindersitzunterlage (1) zwischen Kindersitz und Fahrzeugsitzfläche,
c. sowie wenigstens ein beweglich ausgebildetes Fußpositionierteil (14) zum Auflegen von Kinderbeinen und/oder zum Abstellen von Kinderfüßen aufweist, welches schwenkbar an dem Sitzunterteil (4) angelenkt ist und gegenüber diesem in wenigstens einer Neigungsposition veränderbar ausgebildet ist,
**dadurch gekennzeichnet, dass**
die Kindersitzunterlage (1) als ein zumindest teilweise mehrlagiges und/oder zumindest teilweise gepolstertes textiles Flächengebilde ausgebildet ist, wobei das Fußpositionierteil (14) als Klappelement ausgebildet ist, dessen wenigstens zwei Klappbereiche (26, 28) um eine gemeinsame Rotationsachse (R) gegeneinander verschwenkbar ausgebildet sind, wobei das Fußpositionierteil (14) weiterhin wenigstens ein Stützmittel (30) aufweist, welches die beiden Klappbereiche (26, 28) miteinander verbindet und zugleich voneinander beabstandet und wobei Längsseiten des Stützmittels zumindest teilweise verschwenkbar ausgebildet sind.

2. Kindersitzunterlage nach Anspruch 1,
**dadurch gekennzeichnet, dass**
das mit beiden Klappbereichen (26, 28) lösbar verbundene Stützmittel (30) mit diesen ein gleichseitiges Dreieck oder ein rechtwinkliges Dreieck aufspannt.

3. Kindersitzunterlage nach Anspruch 1,
**dadurch gekennzeichnet, dass**
jeder Klappbereich (26; 28) eine Materialverdickung an einer Innenseite aufweist, wobei die Materialverdickung spiegelsymmetrisch zueinander ausgebildet sind.

4. Kindersitzunterlage nach wenigstens einem der vorangegangen Ansprüche,
**dadurch gekennzeichnet, dass**
die Klappbereiche (26, 28) innenliegende Verstärkungsmittel aufweisen.

5. Kindersitzunterlage nach Anspruch 1,
**dadurch gekennzeichnet, dass**
zwischen Fußpositionierteil (14) und Sitzunterteil (4) wenigstens ein, die beiden Teile verbindendes Längenveränderungsmodul (8) angeordnet ist.

6. Kindersitzunterlage nach Anspruch 5,
**dadurch gekennzeichnet, dass**
das Längenveränderungsmodul (8) wenigstens ein Betätigungsmittel (10) aufweist.

7. Kindersitzunterlage nach Anspruch 1,
**dadurch gekennzeichnet, dass**
das Sitzunterteil (4) und/oder das Rückenteil (2) jeweils wenigstens zwei Polstermittel (22a, 22b, 22c, 22d) aufweist.

8. Kindersitzunterlage nach Anspruch 1,
**dadurch gekennzeichnet, dass**
das Rückenteil (2) und/oder das Sitzunterteil (4) an der dem Kindersitz zugewandten Oberfläche und/oder an der dem Kindersitz abgewandten Oberfläche wenigstens eine Oberflächenmodifizierung (20) aufweisen.

9. Kindersitzunterlage nach Anspruch 8,
**dadurch gekennzeichnet, dass**
die Oberflächenmodifizierung (20) als zusätzlicher Materialauftrag ausgebildet ist.

## Claims

1. Child seat underlay (1) for a child seat in a motor vehicle for putting on children's legs and/or putting down children's feet, wherein the child seat underlay comprises
a. at least one back part (2) for at least partially spanning the back of a backrest of a child seat,
b. at least one seat bottom part (4) connected to the back part (2) for arranging the child seat underlay (1) underneath between the child seat and the vehicle seat surface,
c. as well as at least one movably designed foot positioning part (14) for putting on children's legs and/or putting down children's feet, which is pivotably hinged to the seat bottom part (4) and is designed so as to be changeable in at least one inclined position relative thereto,
**characterised in that** the child seat underlay (1) is designed as at least partially multi-layer and/or at least partially upholstered textile area structure, wherein the foot positioning part (14) is designed as flap element whose at least two flap areas (26, 28) are designed to be pivotably relative to one another about a common axis of rotation (R), wherein the foot positioning part (14) comprises at least one supporting means (30), which connects the two flap areas (26, 28) to each other and at the same time keeps them spaced apart and wherein longitudinal side of the support means (30) designed at least partially pivotable.

2. Child seat underlay (1) according to claim 1, **characterised in that** the supporting means (30) releasably connected to both flap areas (26, 28) forms with them an equilateral triangle or a right-angled triangle.

3. Child seat underlay (1) according to claim 1, **characterised in that** each flap area (26, 28) comprises a material thickening on an inner side, wherein the material thickenings are formed mirror-symmetrically to one another.

4. Child seat underlay (1) according to at least one of the preceding claims, **characterised in that** the flap areas (26, 28) comprise reinforcing means inside.

5. Child seat underlay (1) according to claim 1, **characterised in that** at least one length alternation module (8) connecting the two parts is arranged between foot positioning part (14) and seat bottom part (4).

6. Child seat underlay (1) according to claim 5, **characterised in that** the length alternation module (8) comprises at least one actuating means (10).

7. Child seat underlay (1) according to claim 1, **characterised in that** the seat bottom part (4) and/or the back part (2) each comprises at least two upholstery means (22a, 22b, 22c, 22d).

8. Child seat underlay (1) according to claim 1, **characterised in that** the back part (2) and/or the seat bottom part (4) comprises at least one surface modification (20) on the surface facing the child seat and/or the surface facing away from the child seat.

9. Child seat underlay (1) according to claim 8, **characterised in that** the surface modification (20) is designed as additional material coating.

## Revendications

1. Support de siège de sécurité pour enfant (1) pour un siège de sécurité pour enfant disposé dans un véhicule à moteur pour le repos de jambes d'enfant et/ou pour la pose de pieds d'enfant, dans lequel le support de siège de sécurité pour enfant présente
a. au moins une partie dos (2) pour recouvrir au moins en partie l'arrière d'une zone de dossier d'un siège de sécurité pour enfant,
b. au moins une partie inférieure de siège (4) en liaison avec la partie dos (2) pour la disposition côté inférieur du support de siège de sécurité pour enfant (1) entre le siège de sécurité pour enfant et l'assise de véhicule,
c. ainsi qu'au moins une partie de positionnement de pied (14) réalisée de manière mobile pour la dépose de jambes d'enfant et/ou pour la pose de pieds d'enfants, laquelle est articulée de manière pivotante sur la partie inférieure de siège (4) et est réalisée de manière à pouvoir être modifiée par rapport à celle-ci dans au moins une position d'inclinaison,
**caractérisé en ce que**
le support de siège de sécurité pour enfant (1) est réalisé sous la forme d'une surface textile au moins en partie multicouche et/ou au moins en partie rembourrée, dans lequel la partie de positionnement de pied (14) est réalisée sous la forme d'un élément basculant, dont au moins deux zones basculantes (26, 28) sont réalisées de manière à pouvoir pivoter l'une par rapport à l'autre autour d'un axe de rotation (R) commun, dans lequel la partie de positionnement de pied (14) présente en outre au moins un moyen d'appui (30), lequel relie les deux zones basculantes (26, 28) l'une à l'autre et les espace en même temps l'une de l'autre et dans lequel les grands côtés du moyen d'appui sont réalisés de manière au moins en partie pivotante.

2. Support de siège de sécurité pour enfant selon la revendication 1,
**caractérisé en ce que**
le moyen d'appui (30) relié de manière libérable aux deux zones basculantes (26, 28) forme avec celles-ci un triangle équilatéral ou un triangle rectangle.

3. Support de siège de sécurité pour enfant selon la revendication 1,
**caractérisé en ce que**
chaque zone basculante (26 ; 28) présente un épaississement de matériau sur une face intérieure, dans lequel les épaississements de matériau sont réalisés avec une symétrie spéculaire l'un par rapport à l'autre.

4. Support de siège de sécurité pour enfant selon au moins l'une des revendications précédentes,
**caractérisé en ce que**
les zones basculantes (26, 28) présentent des moyens de renforcement situés à l'intérieur.

5. Support de siège de sécurité pour enfant selon la revendication 1,
**caractérisé en ce que**
au moins un module de modification de longueur (8) reliant les deux parties est disposé entre la partie de positionnement de pied (14) et la partie inférieure de siège (4).

6. Support de siège de sécurité pour enfant selon la revendication 5,
**caractérisé en ce que**
le module de modification de longueur (8) présente au moins un moyen d'actionnement (10).

7. Support de siège de sécurité pour enfant selon la revendication 1,
**caractérisé en ce que**
la partie inférieure de siège (4) et/ou la partie dos (2) présente respectivement au moins deux moyens de rembourrage (22a, 22b, 22c, 22d).

8. Support de siège de sécurité pour enfant selon la revendication 1,
**caractérisé en ce que**
la partie dos (2) et/ou la partie inférieure de siège (4) présentent sur la surface tournée vers le siège de sécurité pour enfant et/ou sur la surface opposée au siège de sécurité pour enfant au moins une modification de surface (20).

9. Support de siège de sécurité pour enfant selon la revendication 8,
**caractérisé en ce que**
la modification de surface (20) est réalisée sous la forme d'une application de matériau additionnelle.
